# EUROPÄISCHE PATENTSCHRIFT

(11) **EP 2 677 171 B1**
(45) Veröffentlichungstag und Bekanntmachung des Hinweises auf die Patenterteilung: **18.07.2018**
(21) Anmeldenummer: 13002852.5
(22) Anmeldetag: 03.06.2013
(51) Int. Cl.: F03D 15/00

(54) **Windkraftanlage mit einem zwischen Planetengetriebe und Generator angeordneten Kupplunsmittel zum Ausgleich von Axial, Radial- uns Winkelversatz**
Wind energy system with a coupling between the planetary gear and generator to compensating for axial, radial and angular displacement
Installation éolienne dotée d'un moyen d'accouplement disposé entre l'engrenage épicycloïdal et le générateur pour l'équilibrage du décalage axial, radial et angulaire

(30) Priorität: 18.06.2012 DE 102012012106
(43) Veröffentlichungstag der Anmeldung: 25.12.2013
(73) Patentinhaber: ZF Friedrichshafen AG, 88046 Friedrichshafen (DE)
(72) Erfinder: Strasser, Dirk, 58339 Breckerfeld (DE); Lohmann, Christian, 58454 Witten (DE)

(56) Entgegenhaltungen:
- EP-A1- 2 075 466
- DE-A1-102009 052 240
- DE-U1-202010 012 752
- US-A1- 2011 081 975
- US-A1- 2012 003 096
- US-B2- 8 075 442

## Beschreibung

### GEBIET DER ERFINDUNG

Die vorliegende Erfindung betrifft eine Windkraftanlage mit einem Planetengetriebe, welches zur Umwandelung einer langsamen Drehbewegung eines Rotors in eine schnelle Drehbewegung zum Betrieb eines integrierten mittellschnelllaufenden elektrischen Generators angeordnet ist, umfassend eine mittelbar mit dem Rotor verbundene Getriebeantriebswelle und eine mittelbar über eine Generatorwelle mit dem Generator verbundene Getriebeabtriebswelle, wobei zwischen dem Generator und dem Planetengetriebe ein Kupplungsmittel angeordnet ist.

Das Anwendungsgebiet der Erfindung erstreckt sich auf Planetengetriebe wie sie im Antriebsstrang einer Windkraftanlage vorkommen. Wichtige Merkmale solcher Planetengetriebe sind unter anderem die Abmessungen und das Gewicht. Dabei kommt es bei der Auslegung der Getriebeteile neben der Werkstoffauswahl und den konstruktiven Aspekten auch auf die herrschenden Kräfte und Drehmomente an, welche auf das Planetengetriebe wirken. Derartige Planetengetriebe unterliegen außergewöhnlichen Beanspruchungen, die aufgrund ihrer baulichen Lage und dem ungleichmäßig wechselndem Belastungskollektivs hervorgerufen werden.

### HINTERGRUND DER ERFINDUNG

Aus der DE 10 2006 051 546 A1 geht unter anderem eine Windenergieanlage mit einem doppelgespeisten Asynchrongenerator hervor, wobei zwischen dem Asynchrongenerator und einem Getriebe eine Kupplung vorgesehen ist. Diese Kupplung dient dazu, den Generator mechanisch vom Triebstrang zu trennen, so dass während eines Phasenschieberbetriebes das Getriebe und der Asynchrongenerator voneinander entkoppelt sind. Die zur Aufrechterhaltung der Drehzahl notwendige Wirkleistung entspricht lediglich den Verlusten im Generator und Umrichter.

Aus dem allgemein bekannten Stand der Technik geht hervor, dass im aufgelösten Antriebstrang das Getriebe, welches in der Regel ein mehrstufiges Planetengetriebe mit Stirnradstufen ist, und der Generator getrennt voneinander aufgeständert sind und jeweils ein eigenes Gehäuse aufweisen. Verbunden werden die Abtriebswelle des Getriebes und die Abtriebswelle des schnelldrehenden Generators durch eine Zwischenwelle. Mittelschnell laufende Antriebsstränge mit wenigen Stirnradstufen gibt sind bereits aus dem Stand der Technik bekannt. Falls nur Planetenstufen verwendet werden, kann die Sonnenradwelle der generatorseitigen Planetenstufe als Verbindungswelle zum Generator dienen.

Aus der US 80,75,442 B2 geht ein Planetengetriebe zur Umwandlung einer langsamen Drehbewegung eines Rotors in eine schnelle Drehbewegung zum Betrieb eines integrierten mittelschnelllaufenden elektrischen Generators hervor. Das Getriebe und der Generator sind koaxial angeordnet und weisen eine gemeinsame Lagerung der Getriebeabtriebswelle und der Generatorantriebswelle auf. Zwischen dem Generator und dem Getriebe ist eine Kupplung in radialer Fluchtung mit dem Lager angeordnet. Zudem sind die durch den Rotor und den Generator erzeugten Kräfte auf das zuvor genannte Lager kleiner als die statischen und dynamischen Drehmomente durch die Verzahnung. Vorteilhafter wäre es, ein gemeinsames Lager von koaxialer Abtriebswelle und Generatorwelle zu vermeiden.

Die Druckschrift DE 10 2009 052240 A1 offenbart eine Windkraftanlage mit einem Rotor, einem Planetengetriebe, einer Getriebeeinheit und einem Generator. Das Planetengetriebe ist zwischen dem Rotor und dem Generator und vor der Getriebeeinheit angeordnet und kardanisch mit der Getriebeeinheit gekoppelt.

Des Weiteren geht aus dem allgemein bekannten Stand der Technik hervor, dass bei mittelschnelllaufenden Getrieben mit direkt angeflanschtem Generator das Ziel möglichst kurz zu bauen im Vordergrund steht. Das Gehäuse des Getriebes kann gleichzeitig das Gehäuse des Generators darstellen, so dass das Getriebe und der Generator aneinander angeflanscht sind. Diese Bauweise ist derart kompakt, dass die Abtriebswelle des Getriebes meistens unmittelbar den Generator antreibt. Da es im integrierten Antriebsstrang zwischen Getriebe und Generator zu Axial-, Radialversatz und Winkelfehlstellungen kommen kann, welche durch Fertigungs- und Montagetoleranzen, aber auch Unwuchten und lastabhängigen Verformungen hervorgerufen werden können, ist es sinnvoll, diese zu kompensieren, um möglichst nur das Torsionsmoment zu übertragen.

### OFFENBARUNG DER ERFINDUNG

Es ist daher die Aufgabe der vorliegenden Erfindung, eine Windkraftanlage, insbesondere den Antriebsstrang einer Windkraftanlage, umfassend einem Planetengetriebe und einem integrierten mittellschnelllaufenden elektrischen Generator bereitzustellen, welcher durch Axial-, Radial- und Winkelversatz hervorgerufene Kräfte und Momente kompensiert, um nur das Torsionsmoment zu übertragen.

Die Aufgabe wird ausgehend von einer Windkraftanlage gemäß dem Oberbegriff von Anspruch 1 und Anspruch 2 in Verbindung jeweils mit deren kennzeichnenden Merkmalen gelöst. Vorteilhafte Weiterbildungen der Erfindung gehen aus den nachfolgenden abhängigen Ansprüchen hervor.

Das Kupplungsmittel ist zum Ausgleich von Axial-, Radial- und Winkelversatz zwischen dem Planetengetriebe und der Generatorwelle angeordnet. Eine derartige Anordnung in Verbindung mit einem geeigneten Kupplungsmittel kompensiert durch Axial-, Radial- und Winkelversatz hervorgerufene Kräfte und Momente wirksam, so dass nur noch das Torsionsmoment vom Planetengetriebe auf den Generator übertragen wird. Dies erlaubt aufgrund des auf den Generator wirkenden geringeren Kräftekollektivs, eine dementsprechende gewichtsoptimierte Konstruktion des Generators.

Die erfinderische Idee lässt sich dadurch verwirklichen, dass das Kupplungsmittel als eine zwischen Planetengetriebe und Generatorwelle angeordnete als Sonnenradwelle ausgebildete generatorseitig kardanisch gelagerte Getriebeabtriebswelle ausgeführt ist. Um wie zuvor Axial-, Radial- und Winkelversatz zwischen Planetengetriebe und Generator zu kompensieren, sollte die Getriebeabtriebswelle eine entsprechende Länge aufweisen. Die Länge der Getriebeabtriebswelle entspricht mindestens dem Doppelten eines Durchmessers der Getriebeabtriebswelle. Der Radialversatz kann dann bei entsprechender Länge durch den Winkelversatz kompensiert werden, wobei der Axialversatz durch die kardanische Lagerung kompensierbar ist.

Gemäß einer dritten bevorzugten Ausführungsform ist das Kupplungsmittel generatorseitig an eine zwischen Planetengetriebe und Generatorwelle angeordnete als Sonnenradwelle ausgebildete Getriebeabtriebswelle mit getriebeseitiger Laufverzahnung angeordnet. Eine derartige Ausführungsform ermöglicht eine Bauraum einsparende, den Antriebsstrang verkürzende Lösung. Die erfinderische Idee lässt auch dadurch verwirklichen, dass das generatorseitige Kupplungsmittel mindestens eine Doppellamellenkupplung umfasst. Zur Kompensation von Axial-, Radial- und Winkelversatz zwischen Planetengetriebe und Generator kann entweder ein Kupplungsmittel oder mehrere Kupplungsmittel hintereinander in Reihe geschaltet werden. Eine Kombination der zuvor genannten Kupplungsmittel ist ebenfalls denkbar.

Es wird weiterhin vorgeschlagen, dass das generatorseitige Kupplungsmittel an der Sonnenradwelle angeflanscht ist, wobei zwischen dem angeflanschten Kupplungsmittel und der Sonnenradwelle eine form- oder kraftschlüssige Verbindung vorgesehen ist. So ist es beispielsweise möglich die axiale Stirnfläche der Sonnenradwelle und die axiale Stirnfläche des Kupplungsmittels in Kontakt zu bringen, um sie dann über Verbindungsmittel, insbesondere Schrauben- oder Bolzenelemente, formschlüssig miteinander zu verbinden.

Vorzugsweise sind bei der kraftschlüssigen Verbindung zwischen dem angeflanschten Kupplungsmittel und der Sonnenradwelle axial an den Stirnflächen der Verbindungsstellen reibwerterhöhende Mittel vorgesehen. Dadurch wird der Reibwert an den besagten Stellen erhöht und der Kraftschluss verstärkt. Besonders geeignete reibwerterhöhende Mittel stellen reibwerterhöhende Folien und reibwerterhöhende Beschichtungen dar, wobei diese in der Regel Hartpartikel aufweisen, die beim zusammenpressen der beiden Stirnflächen aneinander teilweise in die Stirnflächen eindringen und einen Mikroformschluss erzeugen.

Gemäß einer die Erfindung weiter verbessernden Maßnahme wird vorgeschlagen, dass ein generatorseitiger Kupplungsflansch an der Sonnenradwelle angeschmiedet ist. Das direkte Anschmieden des Kupplungsflansches an die Sonnenradwelle, bzw. das Ausbilden des zum Generator gerichteten Ende der Stirnradwelle zum Flansch erfordert zwar ein daran speziell angepasstes Kupplungsmittel, realisiert aber eine verbesserte Verbindungsmöglichkeit zwischen Sonnenradwelle und Kupplungsmittel.

Es wird weiterhin vorgeschlagen, dass ein schmierungsbedürftiges Kupplungsmittel mit Getriebeöl zur Schmierung und Kühlung versorgbar ist, wobei das schmierungsbedürftige Kupplungsmittel gegenüber dem Generator durch ein Dichtungselement öldicht abgedichtet ist. Sofern das Kupplungsmittel keiner Schmierung bedarf, ist eine Abdichtung des Generators vom Getriebe durch das Dichtungselement vorteilhaft.

Die Erfindung schließt die technische Lehre ein, dass das Kupplungsmittel stromisolierend ist oder zumindest stromisolierende Mittel aufweist. Dazu eignen sich Keramik- und Polymerelemente, insbesondere aber Glasfaser- und Karbonelemente. Demnach kann die Verschraubung stromisolierende Buchsen und/oder stromisolierende Unterlegscheiben aufweisen. Weiterhin ist eine stromisolierende Zwischenwelle, insbesondere eine doppelkardanisch gelagerte Abtriebswelle, aus den besagten Werkstoffen denkbar.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: eine schematische Seitendarstellung einer Windkraftanlage,
- Fig.2: eine schematische Längsschnittdarstellung des erfindungsgemäßen Kupplungsmittels, gemäß einer zweiten Ausführungsform, als generatorseitig kardanisch gelagerte Getriebeabtriebswelle, und
- Fig.3: eine schematische Längsschnittdarstellung des erfindungsgemäßen Kupplungsmittels, gemäß einer dritten Ausführungsform, wobei die Getriebeabtriebswelle eine Sonnenradwelle mit generatorseitigem Kupplungsmittel ist.

### DETAILLIERTE BESCHREIBUNG EINER BEVORZUGTEN AUSFÜHRUNGSFORM

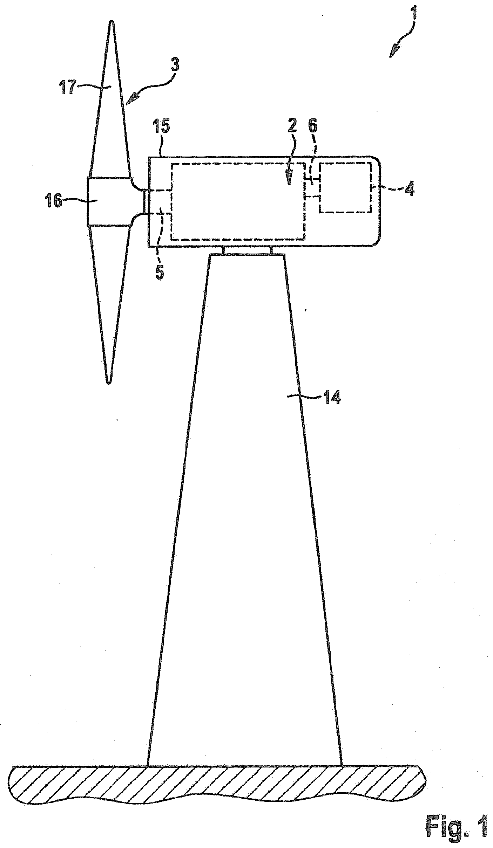

Figur 1 zeigt eine Seitendarstellung einer Windkraftanlage 1 mit ihren wesentlichen Baugruppen. Die Windkraftanlage 1 weist einen Turm 14 auf, auf dem eine um eine Vertikalachse drehbar gelagerte Gondel 15 in Form eines Maschinengehäuses angeordnet ist.
In der Gondel 15 ist ein Planetengetriebe 2 drehfest befestigt, welches eine Getriebeantriebswelle 5 und eine Getriebeabtriebswelle 7 aufweist. Die Getriebeantriebswelle 5 ist mit einer Nabe 16 eines mehrere Rotorblätter 17 aufweisenden Rotors 3 verbunden. Die Getriebeabtriebswelle 7 ist mit einer anzutreibenden Antriebsvorrichtung in Form eines Generators 4 drehverbunden.

Das Planetengetriebe 2 ist so ausgelegt, dass es eine langsame Drehbewegung der Getriebeantriebswelle 5 in eine schnelle Drehbewegung der Getriebeabtriebswelle 7 umsetzt. Dazu weist das Planetengetriebe 2 zwei oder mehrere Planetenradstufen auf, die über ein abschließendes Stirnradgetriebe mit der Getriebeabtriebswelle 7 zusammenwirken. Mittels der Windkraftanlage 1 wird elektrische Energie erzeugt, indem der von dem Wind in Drehbewegung versetzte Rotor 3 die Drehbewegung auf die Getriebeantriebswelle 5 in das Planetengetriebe 2 einleitet. Das Planetengetriebe 2 setzt die Drehbewegung in eine schnellere Drehbewegung um und schließlich wird über die Getriebeabtriebswelle 7 die schnelle Drehbewegung zur Erzeugung von Strom auf den Generator 4 übertragen.

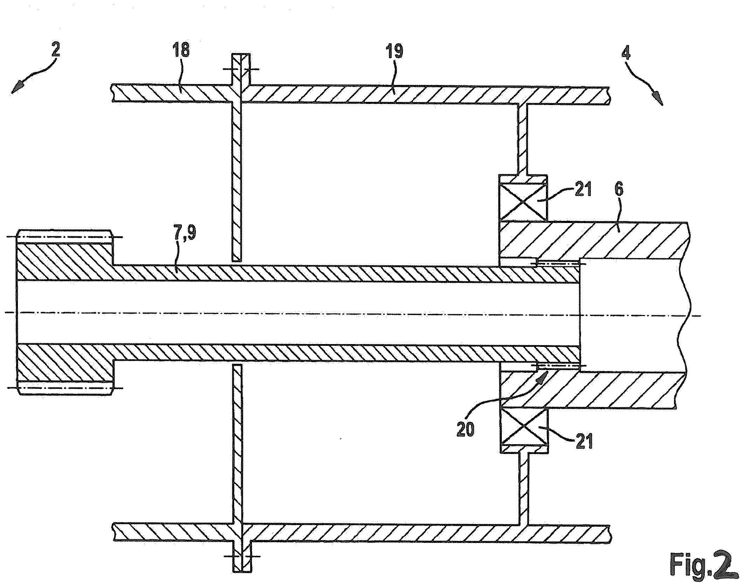

Nach Figur 2 erfolgt die Kompensation von Axial-, Radial- und Winkelversatz zwischen Planetengetriebe 2 und Generator 4 über eine zwischen dem Planetengetriebe 2 und der Generatorwelle 6 angeordnete als Sonnenradwelle 9 ausgebildete generatorseitig kardanisch gelagerte Getriebeabtriebswelle 7. Die Getriebeabtriebswelle 7 weist somit nur ein Gelenk 20 auf, welches an der Innenumfangsfläche der Generatorwelle 6 angeordnet ist. Ferner weist die Getriebeabtriebswelle 7 eine entsprechende Länge auf, so dass der Radialversatz durch den Winkelversatz kompensiert wird und der Axialversatz durch die kardanische Lagerung kompensiert wird.

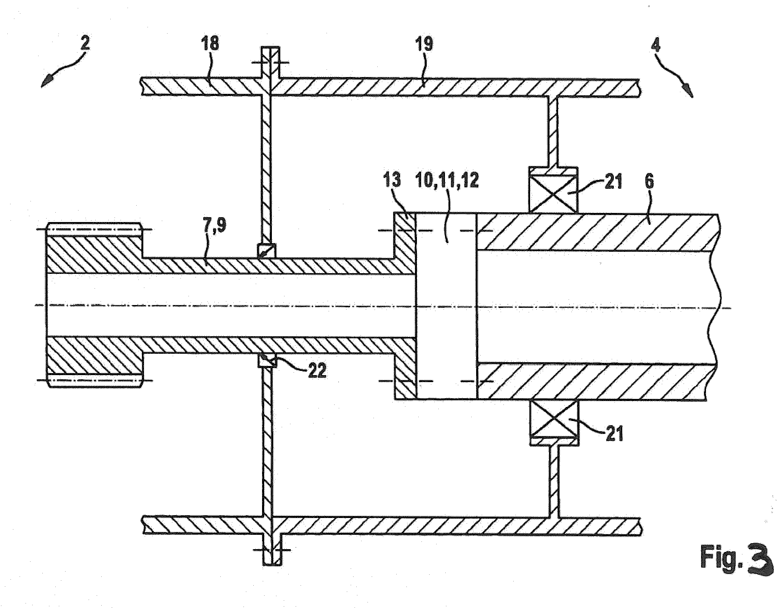

In Figur 3 ist das Kupplungsmittel generatorseitig an die Getriebeabtriebswelle 7 angeordnet. Ferner ist die als Sonnenradwelle 9 ausgebildete Getriebeabtriebswelle 7 zwischen dem Planetengetriebe 2 und der Generatorwelle 6 angeordnet. Das zum Generator gerichtete Ende der Sonnenradwelle 9 ist zu einem Kupplungsflansch 13 ausgebildet. Als Kupplungsmittel ist eine Doppellamellenkupplung 10 an die Stirnfläche des Kupplungsflanschs 13 angeordnet. Ebenso wäre die Anordnung einer Zahnkupplung 11 und/oder einer Laschenkupplung 12 an derselben Position möglich. Radial zwischen einem Außenumfang der Sonnenradwelle 9 und dem Getriebegehäuse 18 ist ein Dichtungselement 22 angeordnet, welches den Generator 4 vom Getriebe 2 öldicht abdichtet.

Es sei darauf hingewiesen, dass Merkmale, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Windkraftanlage
- 2: Planetengetriebe
- 3: Rotor
- 4: Generator
- 5: Getriebeantriebswelle
- 6: Generatorwelle
- 7: Getriebeabtriebswelle
- 8: Sonnenrad
- 9: Sonnenradwelle
- 10: Doppellamellenkupplung
- 11: Zahnkupplung
- 12: Laschenkupplung
- 13: Kupplungsflansch
- 14: Turm
- 15: Gondel
- 16: Nabe
- 17: Rotorblätter
- 18: Getriebegehäuse
- 19: Generatorgehäuse
- 20: Gelenk
- 21: Lager
- 22: Dichtungselement

## Patentansprüche

1. Windkraftanlage (1) mit einem Planetengetriebe (2), welches zur Umwandelung einer langsamen Drehbewegung eines Rotors (3) in eine schnelle Drehbewegung zum Betrieb eines integrierten mittellschnelllaufenden elektrischen Generators (4) angeordnet ist, umfassend eine mittelbar mit dem Rotor (3) verbundene Getriebeantriebswelle (5) und eine mittelbar über eine Generatorwelle (6) mit dem Generator (4) verbundene Getriebeabtriebswelle (7), wobei zwischen dem Generator (4) und dem Planetengetriebe (2) ein Kupplungsmittel angeordnet ist, wobei das Kupplungsmittel zum Ausgleich von Axial-, Radial- und Winkelversatz zwischen Planetengetriebe (2) und Generatorwelle (6) angeordnet ist, **dadurch gekennzeichnet, dass** das Kupplungsmittel eine zwischen Planetengetriebe (2) und Generatorwelle (6) angeordnete als Sonnenradwelle (9) ausgebildete generatorseitig kardanisch gelagerte Getriebeabtriebswelle (7) ist, deren Länge mindestens dem Doppelten eines Durchmessers der Getriebeabtriebswelle (7) entspricht.

2. Windkraftanlage (1) mit einem Planetengetriebe (2), welches zur Umwandelung einer langsamen Drehbewegung eines Rotors (3) in eine schnelle Drehbewegung zum Betrieb eines integrierten mittellschnelllaufenden elektrischen Generators (4) angeordnet ist, umfassend eine mittelbar mit dem Rotor (3) verbundene Getriebeantriebswelle (5) und eine mittelbar über eine Generatorwelle (6) mit dem Generator (4) verbundene Getriebeabtriebswelle (7), wobei zwischen dem Generator (4) und dem Planetengetriebe (2) ein Kupplungsmittel angeordnet ist, wobei das Kupplungsmittel zum Ausgleich von Axial-, Radial- und Winkelversatz zwischen Planetengetriebe (2) und Generatorwelle (6) angeordnet ist, **dadurch gekennzeichnet, dass** das Kupplungsmittel mindestens eine Doppellamellenkupplung (10) umfasst.

3. Windkraftanlage (1) nach einem der Ansprüche 1 bis 2,
**dadurch gekennzeichnet, dass** das Kupplungsmittel generatorseitig an eine zwischen Planetengetriebe (2) und Generatorwelle (6) angeordnete als Sonnenradwelle (9) ausgebildete Getriebeabtriebswelle (7) mit getriebeseitiger Laufverzahnung angeordnet ist.

4. Windkraftanlage (1) nach Anspruch 3,rückbezogen auf Anspruch 2,
**dadurch gekennzeichnet, dass** das Kupplungsmittel an der Sonnenradwelle (9) angeflanscht ist, wobei zwischen dem angeflanschten Kupplungsmittel und der Sonnenradwelle (9) eine form- oder kraftschlüssige Verbindung vorgesehen ist.

5. Windkraftanlage (1) nach Anspruch 4,
**dadurch gekennzeichnet, dass** bei der reibschlüssigen Verbindung zwischen dem angeflanschten Kupplungsmittel und der Sonnenradwelle (9) axial an den Stirnflächen der Verbindungsstellen reibwerterhöhende Mittel vorgesehen sind.

6. Windkraftanlage (1) nach Anspruch 3, rückbezogen auf Anspruch 2,
**dadurch gekennzeichnet, dass** ein generatorseitiger Kupplungsflansch (13) direkt an der Sonnenradwelle (9) angeschmiedet ist.

7. Windkraftanlage (1) nach einem der vorhergehenden Ansprüche,
**dadurch gekennzeichnet, dass** ein schmierungsbedürftiges Kupplungsmittel mit Getriebeöl zur Schmierung und Kühlung versorgbar ist, wobei das schmierungsbedürftige Kupplungsmittel gegenüber dem Generator (4) durch ein Dichtungselement (22) öldicht abgedichtet ist.

8. Windkraftanlage (1) nach einem der vorhergehenden Ansprüche,
**dadurch gekennzeichnet, dass** das Kupplungsmittel stromisolierend ist oder zumindest stromisolierende Mittel aufweist.

## Claims

1. Wind power plant (1), having a planetary transmission (2), which is arranged for the purpose of converting a slow rotary motion of a rotor (3) into a rapid rotary motion for operating an integrated medium-speed electric generator (4), comprising a transmission input shaft (5), which is connected indirectly to the rotor (3), and a transmission output shaft (7), which is connected to the generator (4) indirectly via a generator shaft (6), wherein a coupling means is arranged between the generator (4) and the planetary transmission (2), wherein the coupling means is arranged for the purpose of compensating axial, radial and angular misalignment between the planetary transmission (2) and the generator shaft (6),
**characterized in that** the coupling means is a transmission output shaft (7) arranged between the planetary transmission (2) and the generator shaft (6), designed as a sun wheel shaft (9) and provided with universal-joint support on the generator side, the length of which transmission output shaft corresponds to at least twice a diameter of the transmission output shaft (7).

2. Wind power plant (1), having a planetary transmission (2), which is arranged for the purpose of converting a slow rotary motion of a rotor (3) into a rapid rotary motion for operating an integrated medium-speed electric generator (4), comprising a transmission input shaft (5), which is connected indirectly to the rotor (3), and a transmission output shaft (7), which is connected to the generator (4) indirectly via a generator shaft (6), wherein a coupling means is arranged between the generator (4) and the planetary transmission (2), wherein the coupling means is arranged for the purpose of compensating axial, radial and angular misalignment between the planetary transmission (2) and the generator shaft (6)
**characterized in that** the coupling means comprises at least one dual-plate coupling (10).

3. Wind power plant (1) according to one of Claims 1 to 2,
**characterized in that**, on the generator side, the coupling means is arranged on a transmission output shaft (7) with transmission-side gearing, which is arranged between the planetary transmission (2) and the generator shaft (6) and is designed as a sun wheel shaft (9).

4. Wind power plant (1) according to Claim 3, referred back to Claim 2,
**characterized in that** the coupling means is flanged to the sun wheel shaft (9), wherein a positive or nonpositive joint is provided between the flanged-on coupling means and the sun wheel shaft (9).

5. Wind power plant (1) according to Claim 4,
**characterized in that**, in the case of the frictional joint between the flanged-on coupling means and the sun wheel shaft (9), means that increase the friction coefficient are provided axially on the end faces of the joints.

6. Wind power plant (1) according to Claim 3, referred back to Claim 2,
**characterized in that** a generator-side coupling flange (13) is forged directly on the sun wheel shaft (9).

7. Wind power plant (1) according to one of the preceding claims,
**characterized in that** a coupling means that requires lubrication can be supplied with transmission oil for lubrication and cooling, wherein the coupling means that requires lubrication is sealed off in an oil-tight manner from the generator (4) by a seal element (22).

8. Wind power plant (1) according to one of the preceding claims,
**characterized in that** the coupling means has a current-insulating effect, or at least has means that have a current-insulating effect.

## Revendications

1. Eolienne (1) présentant une transmission (2) à planétaires disposée de manière à convertir un déplacement de rotation lente d'un rotor (3) en un déplacement de rotation rapide qui entraîne un générateur électrique (4) intégré tournant à vitesse moyenne, comprenant
un arbre (5) d'entraînement de transmission relié indirectement au rotor (3) et un arbre (7) de sortie de transmission relié indirectement au générateur (4) par l'intermédiaire d'un arbre (6) de générateur,
un moyen d'accouplement étant prévu entre le générateur (4) et la transmission (2) à planétaires, le moyen d'accouplement étant disposé de manière à compenser des décalages axiaux, radiaux et angulaires entre la transmission (2) à planétaires et l'arbre (6) de générateur,
**caractérisée en ce que**
le moyen d'accouplement est un arbre (7) de sortie de transmission monté sur cardan du côté du générateur, formé entre la transmission (2) à planétaires et le l'arbre (6) de générateur disposé comme arbre (9) de roue solaire, et dont la longueur correspond au moins au double du diamètre de l'arbre (7) de sortie de transmission.

2. Eolienne (1) présentant une transmission (2) à planétaires disposée de manière à convertir un déplacement de rotation lente d'un rotor (3) en un déplacement de rotation rapide qui entraîne un générateur électrique (4) intégré tournant à vitesse moyenne, comprenant
un arbre (5) d'entraînement de transmission relié indirectement au rotor (3) et un arbre (7) de sortie de transmission relié indirectement au générateur (4) par l'intermédiaire d'un arbre (6) de générateur,
un moyen d'accouplement étant prévu entre le générateur (4) et la transmission (2) à planétaires, le moyen d'accouplement étant disposé de manière à compenser des décalages axiaux, radiaux et angulaires entre la transmission (2) à planétaires et l'arbre (6) de générateur,
**caractérisée en ce que**
le moyen d'accouplement comporte au moins un accouplement (10) double à lamelles.

3. Eolienne (1) selon l'une des revendications 1 et 2, **caractérisée en ce que** le moyen d'accouplement est disposé côté générateur sur un arbre (7) de sortie de transmission doté d'une denture côté transmission, configuré comme arbre (9) de roue solaire et disposé entre la transmission (2) à planétaires et l'arbre (6) de générateur.

4. Eolienne (1) selon la revendication 3 dans la mesure où elle est subordonnée à la revendication 2, **caractérisée en ce que** le moyen d'accouplement est fixé par bride sur l'arbre (9) de roue solaire, une liaison en correspondance géométrique ou en correspondance mécanique étant prévue entre le moyen d'accouplement fixé sur bride et l'arbre (9) de roue solaire.

5. Eolienne (1) selon la revendication 4,
**caractérisée en ce que** lorsque la liaison entre le moyen d'accouplement raccordé par bride et l'arbre (9) de roue solaire s'effectue par correspondance de frottement, des moyens augmentant le coefficient de frottement sont prévus axialement sur les surfaces frontales des emplacements de liaison.

6. Eolienne (1) selon la revendication 3 dans la mesure où elle est subordonnée à la revendication 2,
**caractérisée en ce qu'**une bride d'accouplement (13) côté générateur est forgée directement sur l'arbre (9) de roue solaire.

7. Eolienne (1) selon l'une des revendications précédentes, **caractérisée en ce qu'**un moyen d'accouplement nécessitant une lubrification peut être alimenté en huile de transmission servant à la lubrification et au refroidissement, le moyen d'accouplement nécessitant une lubrification étant séparé de manière étanche à l'huile du générateur (4) par un élément d'étanchéité (22).

8. Eolienne (1) selon l'une des revendications précédentes, **caractérisée en ce que** le moyen d'accouplement est isolé du courant ou présente au moins des moyens l'isolant du courant.
